# EUROPEAN PATENT SPECIFICATION

(11) **EP 0 332 396 B1**
(45) Date of publication and mention of the grant of the patent: **11.08.1993**
(21) Application number: 89302257.4
(22) Date of filing: 07.03.1989
(51) Int. Cl.: G01K 7/02

(54) **Improvements in or relating to thermo-couples**
Thermoelemente
Thermocouples

(30) Priority: 08.03.1988 GB 8805485
(43) Date of publication of application: 13.09.1989
(73) Proprietor: BABCOCK ENERGY LIMITED, London SE1 4YA (GB)
(72) Inventor: Wilson, Alexander Bruce, Glasgow G78 1DY Scotland (GB)
(74) Representative: Lewis, David Overington

(56) References cited:
- FR-A- 2 146 544
- GB-A- 1 360 353
- US-A- 2 967 429
- US-A- 4 385 197
- PATENT ABSTRACTS OF JAPAN, vol. 8, no. 74 (E-236)[1511], 6th April 1984;& JP-A-58 222 582

## Description

This invention relates to thermo-couples and arose from a consideration of the problems in measuring temperature gradients in solid objects. In practice, the thermo-couple junction and the wires connected to them have had to be sturdy to enable them to be handled practically. This has, however, tended to limit their accurancy when measuring thermal gradients.

In addition, it has been found that to minimise errors caused by conduction of heat along the thermo-couple leads, both the junction and the adjoining length of the leads for a distance of several (perhaps twenty) times the diameter of the thermo-couple conductors should be at the temperature which is being measured.

This is difficult to achieve with conventionally sheathed, minerally insulated, thermo-couples inserted, for instance, radially in the wall of a cylindrical pressure vessel where a thermal gradient exists across the wall and along the length of the thermo-couple lead. In the past, various methods such as chordal drilling of the vessel have had to be used to ensure that adjoining conductor lengths equivalent to 20 diameters of the thermo-couple are in an approximately isothermal region.

In GB-A-1 360 353 there is disclosed a thermo-couple probe for use in sensing temperature subject to a gradient along the probe including a tube with a rigid wall having, extending axially therein, fine wire insulated electrical conductor leads connected to a thermo-couple extending through a radial perforation in, and secured to, the rigid wall.

By the present invention, the leads are agglomerated in the immediate vicinity of the thermo-couple junction such that a length equivalent to approximately twenty times the diameter of the fine wire is located in a region having a temperature substantially the same as that at the thermo-couple junction.

The invention will now be described, by way of example, with reference to the accompanying, partly diagrammatic, drawing of a cross-sectional view of a portion of a pressure vessel wall 2 with a temperature sensing probe 4 positioned in a blind bore 6 in the wall. The probe 4 includes a thin-walled, stainless steel, tube 8 of about 4.5 mm outer diameter having a closed, spherical, end 10. Small diameter perforations 12 are drilled in the wall of the tube 8 at locations at which it is desired to position thermo-couple junctions. Thus, a first pair of thermo-couple leads 14 having their ends connected together to form a junction 16, and having diameters in the order of 0.2mm., are introduced into the tube 8 from the end remote from the spherical end until the junction 16 just protrudes through the respective perforation 12 in the spherical end 10. The junction 16 is then brazed to the wall of the tube 8. Second, third and fourth thermo-couple junctions 18, 20, 22 of leads 24, 26, 28 are brazed to the walls of the tube through the perforations 12 at spaced intervals along the length of the tube to enable the temperatures at those locations along the probe to be measured.

In order to fulfil the requirement that a length of the thermo-couple leads adjacent the junction approximating to twenty times the thermo-couple conductor diameter is at substantially the same temperature as the junction in circumstances where there is a thermal gradient across the pressure vessel wall 2, and thus along the probe 4, an appropriate length of the thermo-couple leads is agglomerated (that is, coiled, looped or knotted) in the immediate vicinity of the junction.

Thus, in the immediate vicinity of the junctions 16, 18, the respective leads 14, 24 are formed as knots 30, 32 so that the length immediately adjacent the junction is contained in small compass. As an alternative, particularly for the junctions 20, 22 fixed to the side wall of the tube, the leads 26, 28 are coiled as loops 34, 36 that lie in, or near, a radial plane perpendicular to the axis of the tube and containing the respective junction. When the conductor has a diameter of 0.2mm, the length comprised in the knot or loop should preferably be about 4mm.

The interior of the tube is filled with a medium 38, such as magnesium oxide powder, having a thermal conductivity approximating to that of the material of the pressure vessel wall 2, that is, having a relatively high thermal conductivity.

The blind bore 6 in the pressure vessel wall 2 is reamed to give a tight fit of the probe 4 within the bore 6 when cold. The fit tends to become an interference fit with increasing temperature due to a differential thermal expansion effect between the stainless steel composition of the wall of the probe 4 and the mild steel composition of the pressure vessel wall 2. The end 40 of the probe 4 remote from the spherical end 10 is connected into a junction box 42 in which the thermo-couple conductor leads are connected to transmission cables 44 for transmitting the thermo-couple generated current to sensing instruments. A spring loaded fitting 46 (partially indicated in outline) mounted on the pressure vessel wall 2 and bearing against the outer faces of the junction box 42 serves to urge the probe 4 into the bore 6 and thereby ensure contact between the spherical end 10 and the base of the bore.

In operation, to measure thermal gradients in the wall 2 of the pressure vessel, the probe 4 is inserted, closed end of the tube first, into the bore 6, and the spring loaded fitting 46 engaged to ensure good thermal contact of the spherical end 10 of the probe with the base of the bore 6.

Readings of the thermo-couple currents are then taken as required. Since the respective junctions are in good thermal contact with the metal of the wall 2, by virtue of the loading by the spring 46 in the case of the junction 16 at the spherical end 10, or by virtue of the intereference fit between the tube 8 and the bore 6 in the case of the junctions 18, 20, 22, and since the associated thermo-couple leads 14, 24, 26, 28 are aggolomerated adjacent the respective junction such that lengths of the thermo-couple leads approximating to twenty times the conductor diameter are in regions at substantially the same temperature as the junctions, the thermo-couple current readings give reliable indications of the temperatures obtaining, despite the thermal gradient that exists across the wall 2 and along the probe 4.

It will be appreciated that the thermo-couple junctions may be inter-connected in pairs as "hot" and "cold" junctions or that each of the junctions may constitute a "hot" junction with a corresponding "cold" junction situated in the junction box 42.

It will also be appreciated that the arrangement lends itself to the utilisation of fine diameter combined conductor lead cables such as combined cables having an overall diameter of .25mm or less.

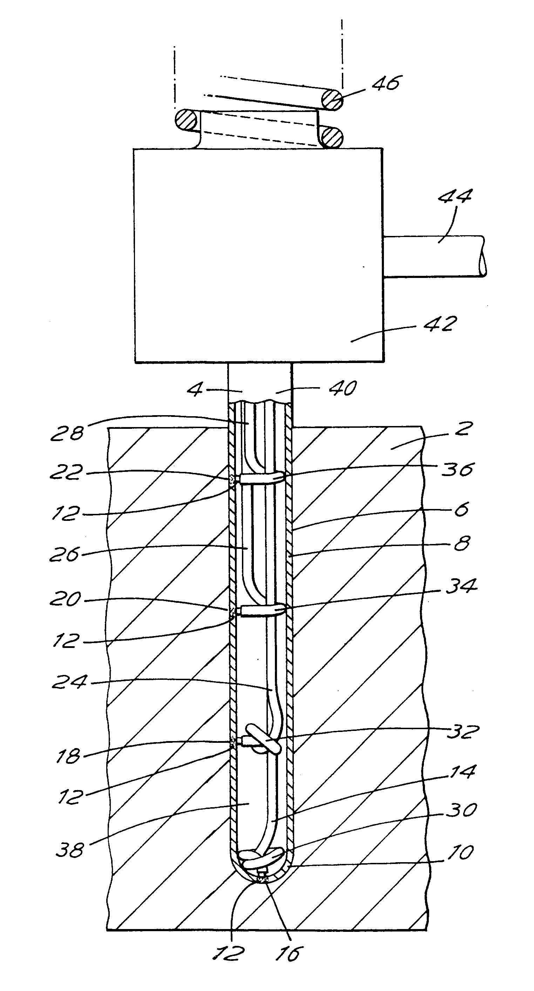

## Claims

1. A thermo-couple probe for use in sensing temperature subject to a gradient along the probe including a tube with a rigid wall having, extending axially therein, fine wire insulated electrical conductor leads connected to a thermo-couple extending through a radial perforation in, and secured to, the rigid wall, characterised in that the leads (14, 24, 26, 28) are agglomerated (30, 32, 34, 36) in the immediate vicinity of the thermo-couple junction (16, 18, 20, 22) such that a length equivalent to approximately twenty times the diameter of the fine wire is located in a region having a temperature substantially the same as that at the thermo-couple junction.

2. A thermo-couple probe as claimed in Claim 1 characterised in that the thermo-couple junction (16) extends through an otherwise closed end portion (10) of the probe (4).

3. A thermo-couple probe as claimed in Claim 1 or Claim 2 characterised in that the rigid wall of the thermo-couple probe (4) is formed with perforations (12) at spaced intervals along the probe and a thermo-couple junction (16,18,20,22) is positioned through each perforation.

4. A thermo-couple probe as claimed in any preceding claim, characterised in that the tube is filled with a material (38) having a relatively high thermal conductivity.

5. A thermo-couple probe as claimed in any preceding Claim, characterised in that the thermo-couple junctions (16,18,20,22) spaced along the probe (4) are electrically connected together in pairs as "hot" and "cold" junctions adapted to measure a temperature gradient along the probe.

6. A thermocouple probe as claimed in any preceding claim, characterised in that the leads (14, 24, 26, 28) are agglomerated respectively by forming a loop (34, 36) or knot (30, 32) in the lead in the immediate vicinity of the associated thermo-couple junction (20, 22, 16, 18).

7. A thermocouple probe as claimed in any preceding claim, characterised in that the probe is arranged to be positionable in a bore (6) in a pressure vessel wall (12) with the probe a force fit in the bore and urged by spring means (46) to be held in seating engagement with a base portion of the bore in the pressure vessel wall.

## Patentansprüche

1. Thermoelementsonde zur Messung der Temperatur, die entlang der Sonde einen Gradienten aufweist, einschließlich eines Rohrs mit einer festen Wandung, das sich axial darin erstreckende isolierte elektrische Leitungen aus feinem Draht aufweist, die mit einem Thermoelement verbunden sind, das sich durch eine radiale Durchbrechung in der festen Wandung erstreckt und an dieser befestigt ist, dadurch gekennzeichnet, daß die Leitungen (14, 24, 26, 28) in der unmittelbaren Nachbarschaft der Thermoelement-Lötstelle (16, 18, 20, 22) verknüllt (30, 32, 34, 36) sind, so daß eine Länge äquivalent ungefähr dem 20-fachen Durchmesser des feinen Drahtes in einer Region gelegen ist, die eine im wesentlichen gleiche Temperatur mit der Thermoelement-Lötstelle aufweist.

2. Thermoelementsonde nach Anspruch 1, dadurch gekennzeichnet, daß die Thermoelement-Lötstelle (16) sich durch ein sonst geschlossenes Endteil (10) der Sonde (4) erstreckt.

3. Thermoelementsende nach Anspruch 1 oder 2, dadurch gekennzeichnet, daß die feste Wandung der Thermoelementsonde (4) mit Durchbrechungen (12) in Abständen entlang der Sonde ausgebildet ist und eine Thermoelement-Lötstelle (16, 18, 20, 22) in jeder Durchbrechung angeordnet ist.

4. Thermoelementsonde nach einem der vorhergehenden Ansprüche, dadurch gekennzeichnet, daß das Rohr mit einem Material (38) gefüllt ist, das eine relativ hohe thermische Leitfähigkeit aufweist.

5. Thermoelementsonde nach einem der vorhergehenden Ansprüche, dadurch gekennzeichnet, daß die entlang der Sonde (4) angeordneten Thermoelement-Lötstellen (16, 18, 20, 22) in Paaren als "heiße" und "kalte" Lötstellen elektrisch miteinander verbunden sind, in Anpassung zur Messung eines Temperaturgradienten entlang der Sonde.

6. Thermoelementsonde nach einem der vorhergehenden Ansprüche, dadurch gekennzeichnet, daß die Leitungen (14, 24, 26, 28) jeweils verknüllt sind durch Bildung einer Schleife (34, 36) oder eines Knoten (30, 32) in der Leitung in unmittelbarer Nachbarschaft der zugeordneten Thermoelement-Lötstelle (20, 22, 16, 18).

7. Thermoelementsonde nach einem der vorhergehenden Ansprüche, dadurch gekennzeichnet, daß die Sonde zur Unterbringung in einer Bohrung (6) in einer Druckgefäßwandung (12) dient, wobei die Sonde mit Preßsitz in der Behrung angeordnet ist und durch eine Federeinrichtung (46) gedrängt dazu wird, im Schiebesitz in einem Basisteil einer Bohrung in der Druckgefäßwandung gehalten zu werden.

## Revendications

1. Sonde à thermocouples pour utilisation à la détection d'une température soumise à un gradient le long de la sonde, incluant un tube avec une paroi rigide comportant, s'étendant axialement à l'intérieur, des conducteurs électriques isolés, en fil fin, reliés à un thermocouple s'étendant dans une perforation radiale dans la paroi rigide et fixé à celle-ci, caractérisé en ce que les conducteurs (14, 24, 26, 28) sont agglomérés (30, 32, 34, 36) dans le voisinage immédiat de la jonction de thermocouple (16, 18, 20, 22) de sorte qu'une longueur équivalente à approximativement vingt fois le diamètre du fil fin est logée dans une région ayant une température qui est sensiblement la même que celle de la jonction de thermocouple.

2. Sonde à thermocouples selon la revendication 1, caractérisée en ce que la jonction de thermocouple (16) traverse une partie d'extrémité (10), par ailleurs fermée de la sonde (4).

3. Sonde à thermocouples selon la revendication 1 ou la revendication 2, caractérisée en ce que la paroi rigide de la sonde à thermocouples (4) est formée avec des perforations (12) à des intervalles espacés le long de la sonde et en ce qu'une jonction de thermocouple (16, 18, 20, 22) est placée dans chacune des perforations.

4. Sonde à thermocouples selon l'une quelconque des revendications précédentes, caractérisée en ce que le tube est rempli d'une matière (38) ayant une conductivité thermique relativement élevée.

5. Sonde à thermocouples selon l'une quelconque des revendications précédentes, caractérisée en ce que les jonctions de thermocouple (16, 18, 20, 22) espacées le long de la sonde (4) sont connectées électriquement ensemble, en paires, sous forme de jonctions "chaude" et "froide" conçues pour mesurer un gradient de température le long de la sonde.

6. Sonde à thermocouples selon l'une quelconque des revendications précédentes, caractérisée en ce que les conducteurs (14, 24, 26, 28) sont agglomérés respectivement par la formation d'une boucle (34, 36) ou d'un noeud (30, 32) dans le conducteur au voisinage immédiat de la jonction de thermocouple (20, 22, 16, 18) associée.

7. Sonde à thermocouples selon l'une quelconque des revendications précédentes, caractérisée en ce que la sonde est disposée pour pouvoir être placée dans un trou (6) dans une paroi de récipient sous pression (12), la sonde étant montée à force dans le trou et rappelée par un moyen formant ressort (46) pour être maintenue en contact appuyé avec la partie base du trou dans la paroi de récipient sous pression.
